# EUROPEAN PATENT SPECIFICATION

(11) **EP 1 335 786 B1**
(45) Date of publication and mention of the grant of the patent: **27.09.2006**
(21) Application number: 01993498.3
(22) Date of filing: 05.11.2001
(51) Int. Cl.: B01D 46/10, B01D 46/42

(54) **METHOD FOR FORMING AN AIR FILTER, THE AIR FILTER OBTAINED AND THE RELATIVE MOULD**
VERFAHREN ZUR HERSTELLUNG EINES LUFTFILTERS
PROC D POUR LA FORMATION D'UN FILTRE AIR, FILTRE AIR AINSI OBTENU, ET MOULE CET EFFET

(30) Priority: 10.11.2000 IT MI20002435
(43) Date of publication of application: 20.08.2003
(73) Proprietor: DOW GLOBAL TECHNOLOGIES INC., Midland, Michigan 48674 (US)
(72) Inventor: COCCONI, Carlo, I-42015 Correggio (IT)
(74) Representative: Raynor, John
(86) International application number: PCT/US2001/047323
(87) International publication number: WO 2002/038246

(56) References cited:
- US-A- 4 159 197
- US-A- 5 795 361
- US-A- 6 045 600

## Description

The present invention relates to a method for forming and packaging an air filter in accordance with the precharacterising part of the main claim; the invention also relates to packaging for the filter. To form known filters, aluminium moulds are usually used presenting a first recessed seat in which plastic material is cast to form the seal gasket, and a second support seat for the filter element to which said gasket is to be secured.

These moulds are usually closed by a backing mould for impressing a desired shape on the upper part of the gasket, for preventing undesired expansion of the plastic material during its curing process, and for maintaining the filter element in a predetermined position. To accelerate the curing time of the gasket plastic material and to prevent the moulds remaining occupied for too long a time, the moulds are heated, generally within a tunnel, to accelerate the polymerization of the gasket plastic material.

The mould then has to be opened, and the filter extracted and trimmed to remove any burrs. Finally the filter has to be packaged in suitable packaging for its sale. Before they can be reused, the moulds also have to be treated with a separation agent, a complication which further lengthens the production time of known filters.

The production process for known filters is relatively lengthy and for its implementation requires means which are relatively complicated to control and use.

GB-A-1319459 discloses a method for forming a filter in which the filter element is associated with a plastic material while it is in a mould. The mould can then be maintained with the gasket.

An object of the present invention is to provide a method for producing and packaging filters by which the operations and the necessary equipment for producing the filter are simplified.

In a first aspect of the present invention, there is provided a packaging for an air filter of the type comprising a filter element and at least one seal gasket rigidly secured to said filter element, the packaging comprising:
a mould portion comprising a support surface for the filter element and a recessed surround for receiving plastic material for forming the filter gasket; and
a cover comprising a seat for receiving the filter element.

In a second aspect of the present invention, there is provided a method of forming and packaging an air filter of the type comprising a filter element and at least on seal gasket rigidly secured to said filter element, comprising the steps of:
casting a plastic material in a mould portion;
associating a filter element with said plastic material, whilst said plastic material is still in said mould portion and the curing of said plastic material is at least partially in progress; positioning a cover on the mould portion; and
securing the cover to the mould portion to form the packaging around the air filter.

The present invention will be more apparent from the accompanying drawings, which are provided by way of non-limiting example and in which:
Figure 1 is a schematic perspective of a mould;
Figure 2 is a schematic cross-section therethrough with a filter inserted;
Figure 3 is a schematic perspective view of a mould according to the invention, in the open position;
Figure 4 is a schematic cross-section therethrough in the closed position;
Figure 5 is a schematic cross-section therethrough with a filter inserted;

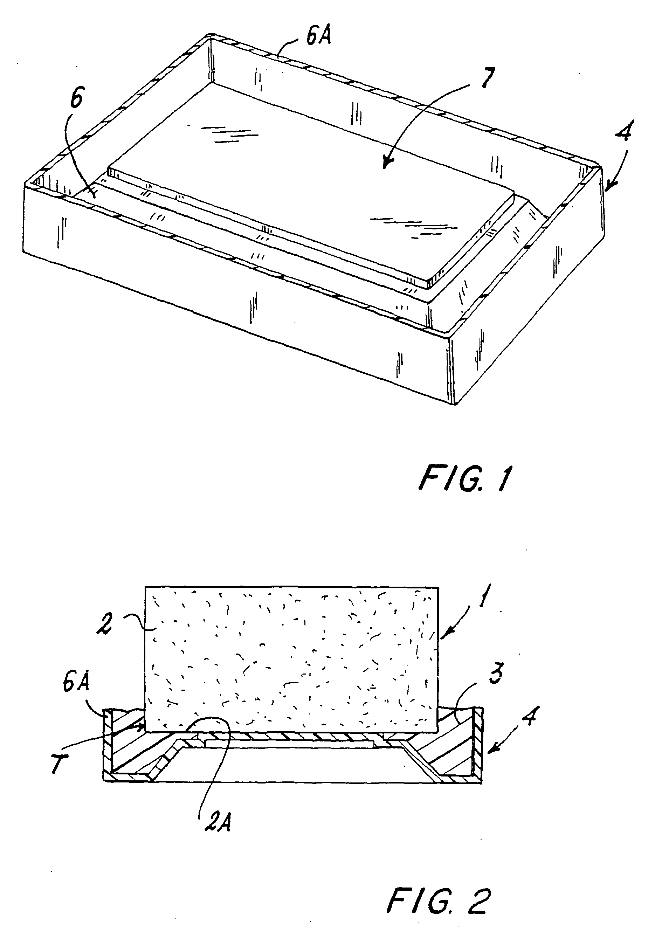

To form an air filter 1 comprising a filter element 2 of usual type and a seal gasket 3 rigidly secured to said gasket element along the perimetral edge of the face 2A of said element, a plastic material is cast in a mould 4 (Figures 1, 2). To rigidly secure the filter element to the gasket in a sealed manner, the filter element 2 is associated with the plastic material while this is in the mould and is still only partially cured. According to the invention, to form each filter a dedicated mould 4 is used and is maintained removably associated with the gasket on termination of the filter forming process. In this respect, according to the invention the mould is advantageously constructed such as to enable each filter to use its own dedicated mould, the mould being in this manner a disposable mould (in the sense that it is not used again for a further moulding operation) which can hence finally remain associated with the filter after the filter forming process.

By virtue of the invention, the filter forming process is much simplified, in that it is not longer necessary to provide heating means for accelerating the mould plastic material curing process, neither is it necessary to trim the gasket. It is also no longer necessary to transfer the moulds between the plastic material filling stations, the curing stations and the filter extraction stations, and to return the moulds to the filling station when the filters have been formed. When filled with the plastic material for the gasket and with the filter element, the moulds of the invention can be simply stored or packaged without having to force the plastic material curing process by thermal treatment.

In the method of the invention, the mould 5 is constructed such that it also forms the packaging for the filter; in this manner the filter production process is further accelerated by eliminating the filter packaging stage. Figures 1 and 2 show a first embodiment of a mould according to the invention, comprising a recessed surround 6 into which to pour the plastic material for forming the filter gasket 3, and a flat support surface 7 for the filter element 2. The flat surface 2 is provided inwards of said surround at a lower height than the free edge 6A of the recessed surround 6 and its dimensions are less than those of the face 2A of the filter element 2, so that the plastic material can surround a perimetral portion T of the element 2 at said face 2A.

The mould of the invention is formed of any material which allows easy detachment of the plastic material used to form the gasket 3 but which ensures that the shape of the mould is maintained during the infeed and curing of the gasket plastic material within the recessed surround 6.

Advantageously the plastic materials for forming the mould and the gasket are mutually incompatible, that is plastic materials having characteristics such that they cannot merge with each other during the curing of the plastic material with which the gasket is formed, and consequently extraction of the filter from the mould does not prove difficult.

The mould can for example be formed of polystyrene, polypropylene, polyethylene, teflon or mixtures of these plastic materials, or of polyethylene-clad paper. The gasket can for example be formed of a plastic polymer, preferably polyurethane. Crosslinked or non-crosslinked thermosetting polymers such as polyurethanes can for example be used. Polyurethane polymers can, for example, be used having a density variable between 0.1 Kg/l and 2 Kg/l.

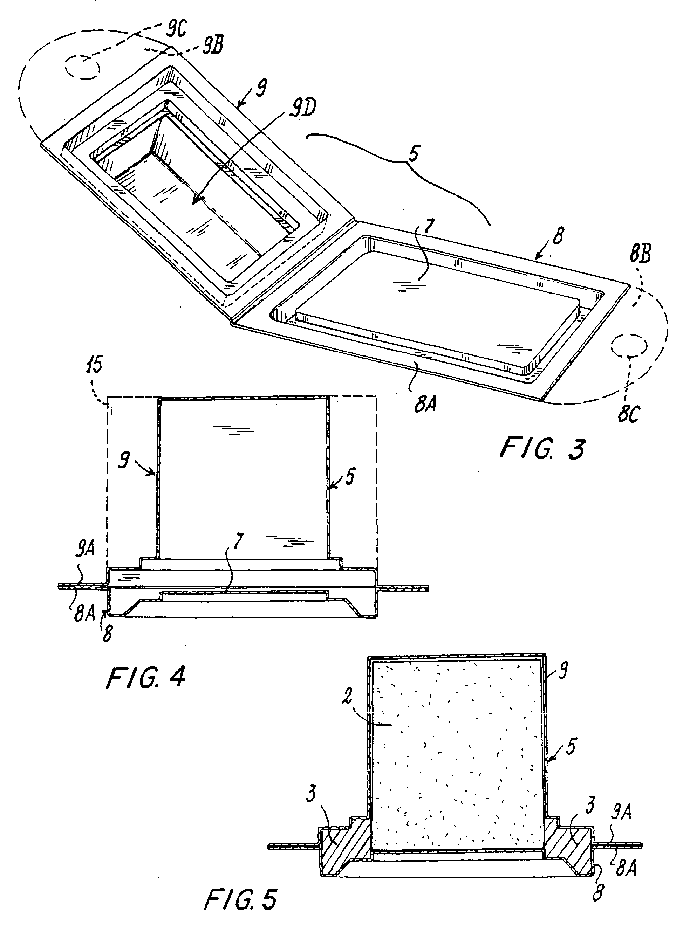

Figures 3-5 show a variant of the already illustrated mould, in which in contrast to the already described embodiment the mould 8 in which the plastic material is cast also has a backing mould or cover 9.

The purpose of this cover is to upperly close the mould in order to limit growth of the plastic material during its curing while at the same time compelling it to assume a desired shape, so that the gasket 3 upperly presents a particular form. At the same time the cover 9 is able to maintain the filter element 2 in its correct position during the curing of the plastic material, for which purpose it presents a seat 9D shaped to house the filter element 2 as an exact fit.

The cover 9 can be constructed in one piece with the mould 8 or can be secured to it in known manner (for example by bonding or gluing or insertion-fitting) once the gasket plastic material has been poured in and the filter element positioned. Advantageously, the cover 9 and the mould 8 present flat edge faces 8A and 9A which make contact with each other when the two parts are superposed, hence facilitating the joining of the two parts. This covered mould can also be formed of the same materials described with reference to the already described mould 4.

The covered mould is used as the filter packaging or wrapping for its marketing. For this purpose the flat edge faces 8A, 9A can also for example comprise enlarged elements 8B, 9B and/or holes 8C/9C or other usual expedients to facilitate the fixing of the package to a display unit and/or for applying labels. When used as packaging, the mould 5 can also comprise additional outer walls 15 (shown by dashed lines in Figure 4), to give the mould a more pleasant appearance. When used as packaging, the cover 9 and mould 8 can be rigidly secured together once the plastic material has been poured into the mould 8 and the filter element 2 has been positioned.

Finally it should be noted that the aforedescribed embodiments are provided by way of example only, and that numerous variants are possible, all falling within the same inventive concept. For example, the mould and/or the cover could be provided with further seats for also forming a seal gasket along another face of the filter element 2 and/or the gasket 3 could be provided in a different position of the filter element.

## Claims

1. Packaging for an air filter of the type comprising a filter element and at least one seal gasket rigidly secured to said filter element, the packaging comprising:
a mould portion comprising a support surface for the filter element and a recessed surround for receiving plastic material for forming the filter gasket; and
a cover comprising a seat for receiving the filter element.

2. Packaging as claimed in Claim 1, wherein the mould portion and the cover are constructed in one piece.

3. Packaging as claimed in Claim 1 or Claim 2, wherein the cover and the mould portion comprise flat edge faces which make contact with each other when the two parts are superposed to facilitate the joining of the mould portion and cover together.

4. Packaging as claimed in Claim 3, wherein the flat edge faces additionally comprise enlarged elements and/or holes.

5. Packaging as claimed in any one of the preceding claims, wherein the mould portion additionally comprises a free edge surrounding the recessed surround, wherein the free edge is higher than the support surface.

6. Packaging as claimed in any one of the preceding claims, wherein the mould portion is formed of polystyrene, polypropylene, polyethylene, Teflon, or mixtures thereof, or of polyethylene-clad paper.

7. A method of forming and packaging an air filter of the type comprising a filter element and at least on seal gasket rigidly secured to said filter element, comprising the steps of:
casting a plastic material in a mould portion;
associating a filter element with said plastic material, whilst said plastic material is still in said mould portion and the curing of said plastic material is at least partially in progress; positioning a cover on the mould portion; and
securing the cover to the mould portion to form the packaging around the air filter.

8. A method as claimed in Claim 7, wherein the curing of the plastic material takes place within the mould without subjecting the plastic material to thermal treatment to accelerate the curing.

9. A method as claimed in Claim 7 or Claim 8, comprising the additional step of applying at least one label to the packaging.

## Patentansprüche

1. Verpackung für ein Luftfilter vom Typ mit einem Filterelement und mindestens einer Dichtung, die fest am Filterelement befestigt ist, wobei die Verpackung umfasst:
einen Formteil, der eine Stützfläche für das Filterelement und einen ausgesparten Umgebungsbereich zum Aufnehmen von Kunststoffmaterial zum Ausbilden der Filterdichtung aufweist; und
einen Deckel, der einen Sitz zum Aufnehmen des Filterelements aufweist.

2. Verpackung wie in Anspruch 1 beansprucht, bei der der Formteil und der Deckel in einem Stück aufgebaut sind.

3. Verpackung wie in Anspruch 1 oder 2 beansprucht, bei der der Deckel und der Formteil ebene Randflächen aufweisen, die miteinander in Kontakt kommen, wenn die zwei Teile übereinander gelegt werden, um das Zusammenfügen des Formteils und des Deckels zu erleichtern.

4. Verpackung wie in Anspruch 3 beansprucht, bei der die ebenen Randflächen zusätzlich erweiterte Elemente und/oder Löcher aufweisen.

5. Verpackung wie in irgendeinem der vorhergehenden Ansprüche beansprucht, bei der der Formteil zusätzlich eine freie Kante aufweist, die den ausgesparten Umgebungsbereich umgibt, wobei die freie Kante höher als die Stützfläche ist.

6. Verpackung wie in irgendeinem der vorhergehenden Ansprüche beansprucht, bei der der Formteil aus Polystrol, Polypropylen, Polyethylen, Teflon oder Mischungen davon oder aus Polyethylen-kaschiertem Papier ausgebildet ist.

7. Verfahren zum Ausbilden und Verpacken eines Luftfilters vom Typ mit einem Filterelement und mindestens einer Dichtung, die fest am Filterelement befestigt ist, mit den Schritten:
Gießen eines Kunststoffmaterial in einen Formteil;
Verbinden eines Filterelements mit dem Kunststoffmaterial, während das Kunststoffmaterial noch in dem Formteil ist und das Aushärten des Kunststoffmaterials zumindest teilweise im Gange ist;
Anordnen eines Deckels auf dem Formteil; und
Befestigen des Deckels am Formteil, um die Verpackung rings um den Luftfilter auszubilden.

8. Verfahren wie in Anspruch 7 beansprucht, bei dem das Aushärten des Kunststoffmaterials in der Form stattfindet, ohne das Kunststoffmaterial einer Wärmebehandlung zum Beschleunigen des Aushärtens zu unterziehen.

9. Verfahren wie in Anspruch 7 oder Anspruch 8 beansprucht, mit dem zusätzlichen Schritt, mindestens ein Etikett an der Verpackung anzubringen.

## Revendications

1. Conditionnement pour un filtre à air du type comprenant un élément filtrant et au moins une garniture d'étanchéité rigidement fixée à cet élément filtrant, le conditionnement comprenant :
une partie de moule comportant une surface de support pour l'élément filtrant et un entourage creux pour recevoir de la matière plastique pour former la garniture du filtre ; et
un couvercle comportant un siège pour recevoir l'élément filtrant.

2. Conditionnement selon la revendication 1, dans lequel la partie de moule et le couvercle sont construits en une pièce.

3. Conditionnement selon la revendication 1 ou la revendication 2, dans lequel le couvercle et la partie de moule comprennent des faces à bords plats qui viennent en contact l'une avec l'autre lorsque les deux parties sont superposées, afin de faciliter l'assemblage de la partie de moule et du couvercle ensemble.

4. Conditionnement selon la revendication 3, dans lequel les faces à bords plats comprennent également des éléments agrandis et/ou des orifices.

5. Conditionnement selon l'une quelconque des revendications précédentes, dans lequel la partie de moule comprend également un bord libre entourant l'entourage creux, dans lequel le bord libre est plus haut que la surface de support.

6. Conditionnement selon l'une quelconque des revendications précédentes, dans lequel la partie de moule est constituée de polystyrène, de polypropylène, de polyéthylène, de téflon ou de leurs mélanges, ou de papier revêtu de polyéthylène.

7. Procédé pour la formation et le conditionnement d'un filtre à air du type comprenant un élément filtrant et au moins une garniture d'étanchéité rigidement fixée à cet élément filtrant, comprenant les étapes consistant à :
couler une matière plastique dans une partie de moule ;
associer un élément filtrant à cette matière plastique, pendant que cette matière plastique est toujours dans la partie de moule et que le durcissement de cette matière plastique est au moins partiellement en cours ;
positionner un couvercle sur la partie de moule ; et
fixer le couvercle à la partie de moule pour former le conditionnement autour du filtre à air.

8. Procédé selon la revendication 7, dans lequel le durcissement de la matière plastique a lieu à l'intérieur du moule sans soumettre cette matière plastique à un traitement thermique pour accélérer le durcissement.

9. Procédé selon la revendication 7 ou la revendication 8, comprenant l'étape supplémentaire consistant à appliquer au moins une étiquette sur le conditionnement.
